# EUROPEAN PATENT SPECIFICATION

(11) **EP 2 065 570 B1**
(45) Date of publication and mention of the grant of the patent: **26.07.2017**
(21) Application number: 08164896.6
(22) Date of filing: 23.09.2008
(51) Int. Cl.: F01K 23/10, F01N 3/10, F23G 7/06, F23G 5/32, F23L 15/04, F23J 15/00, F01N 3/20, F01N 3/30, F01N 3/36, F01K 23/06

(54) **Burner for generating reductive atmosphere of exhaust gas in engine cogeneration plant having denitrification process**
Brenner zur Erzeugung einer reduktiven Abgasatmosphäre in der Motorkogenerationsanlage mit Dentrifikationsverfahren
Brûleur pour générer une atmosphère réductrice de gaz d'échappement dans une installation de cogénération de moteur dotée d'un procédé de dénitrification

(30) Priority: 12.11.2007 KR 20070114984
(43) Date of publication of application: 03.06.2009
(73) Proprietor: Korea Institute of Energy Research, Daejeon (KR)
(72) Inventor: Kim, Hyouck-ju, Daejeon (KR); Park, Hwa-choon, Daejeon (KR); Chung, Dae-hun, Seoul (KR); Choi, Jae-joon, Daejeon (KR)
(74) Representative: Appleyard Lees IP LLP

(56) References cited:
- EP-A1- 1 172 525
- WO-A2-2006/138174
- DE-A1- 2 547 858
- DE-A1- 3 145 028
- FR-A1- 2 692 966
- US-A- 3 837 814

## Description

### BACKGROUND OF THE INVENTION

### Field of the Invention

The present invention relates to a burner for generating a reductive atmosphere of exhaust gas in an engine cogeneration plant having a denitrification process, which is to produce a catalyst activation condition to remove nitrogen oxides from the engine exhaust gas in the engine cogeneration plant using a lean burn engine. More specifically, the present invention relates to a burner for stable combustion, in which one or more auxiliary burners are installed in a post-combustion burner installed in a boiler of an engine cogeneration plant.

### Background of the Related Art

In general, an internal combustion engine is described by a motive power where fuel is supplied into a cylinder and then the fuel is burned and exploded to generate a gas, of which expansion force is utilized to move a piston. A boiler is described by an apparatus that produces high-pressure steam or hot water by heating water, and is mainly used in a heating facility, a bathhouse, and as an industrial heat source for turbine driving, and the like. US 3837814 A describes an exhaust gas cleaning device comprising an exhaust gas combustion chamber provided in the exhaust system into which the exhaust gases as well as secondary air are fed. DE 3145028 A1 describes a device for injection and post-combustion of exhaust gases from internal combustion engines.

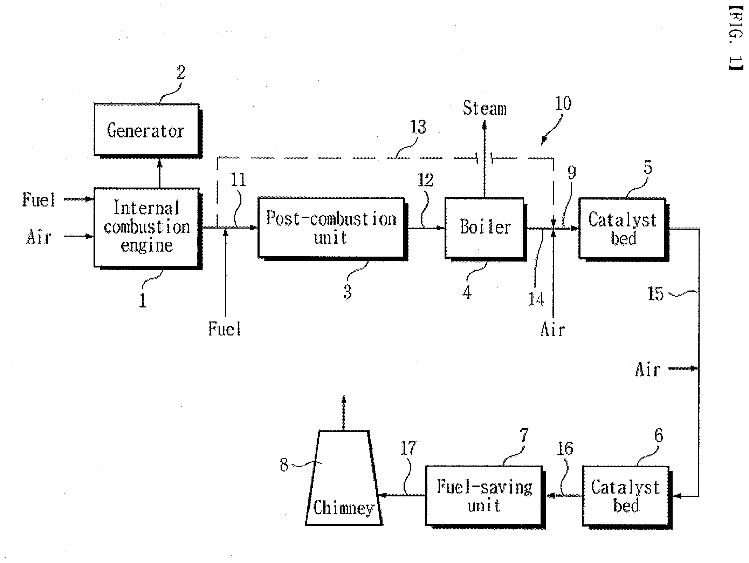

FIG. 1 is a block diagram showing a conventional engine cogeneration plant capable of reducing nitrogen oxides. The engine cogeneration plane of FIG. 1 is disclosed in U.S. Patent No. 5,022,226 and includes an internal combustion engine 1, a generator 2, a post-burner 3, a boiler 4, catalyst beds 5 and 6, a fuel saving unit 7 and a chimney.

In the above cogeneration plant, fuel and oxygen are supplied to an internal combustion engine 1 to generate electricity, and the heat of exhaustion gas is used to produce steam. Here, the combustion exhaust gas stream is recovered from the internal combustion engine 1 at about 260°C to 538°C (500 to 1000°F) and contains about 6 to 15% of oxygen. The stream having sufficient fuel is supplied a thermal reaction means required to react the fuel, nitrogen oxides and available oxygen, thereby generating a reduced oxygen stream. The reduced oxygen stream is cooled inside a heat exchanger. Depending on reduction condition, conversion oxygen is supplied to the cooled stream before being supplied to the catalyst bed. The oxygen may be provided directly with air. More preferably, the oxygen may be supplied after being discharged from the internal combustion engine 1 and passing through the exhaust stream channel. The conversion oxygen stoichiometrically exceeds the amount of nitrogen oxygen, but is less than the amount of combustible materials. According to the result, the nitrogen oxides inside the stream are treated into nitrogen dioxide at the final end portion before the catalyst bed. Thereafter, the nitrogen dioxide is reduced at the remaining portion of the catalyst bed 6 due to excessive combustible materials. The stream, where the amount of nitrogen oxide is considerably reduced, is discharged.

The exhaust gas discharged from the internal combustion engine 1 is transferred to a thermal reactor such as the post-burner 3 and burned at 992°C to 1760°C (1800 to 3200°F), preferably 1093°C to 1316°C (2000 to 2400°F). Gaseous harmful substances have temperatures of 992°C to 1760°C (1800 to 3200°F) and contains about 750ppmv of nitrogen oxides. The above stream passes through a heat exchanger. The harmful substance is cooled to about 316°C to 566°C (600 to 1050°F), preferable 399°C to 482°C (750 to 900°F). The values corresponding to the exhaust stream are obtained at the boiler 4, and steam is produced accordingly. The exhaust gas discharged from the boiler, which contains sufficient fuel and cooled, is mixed with a desired amount of conversion oxygen before passing through the catalyst bed 5 and added to the duct 9 at 14. As described above, the oxygen is added directly to the air supplier 14, but may be added through a desired channel of the engine exhaust unit from the duct 11 via a line 13. Due to this construction, the amount of oxygen injected to the post-burner 3 can be reduced. Therefore, the amount of fuel required to the post-burner can be reduced. The important purpose of conversion oxygen is accomplished, depending on the mixture injected into the catalyst bed 5.

In particular, the amount of conversion oxygen added to the cooled steam from the boiler 4 exceeds that of nitrogen oxides within the stream, but is less than the combustible substances within the stream. In general, the added oxygen is about 20.2 to 0.9%. The nitrogen oxides in the line 9 are in the form of nitrogen monoxide. The mixture is injected through the front end portion of the catalyst bed 5, where the oxygen is reacted with nitrogen monoxide to be converted in the form of nitrogen dioxide.

The amount of oxygen within the duct 16, which is placed under the catalyst bed 6, is 1.5 to 3%. The value of the nitrogen oxides within the duct 16 is 15ppmv and the carbon monoxide is reduced to below 50ppmv. The oxidized gaseous harmful substances discharged from the catalyst bed 6 are transferred to the fuel saving unit 7 or the low pressure waste heat boiler from the duct 16. The cooled gas having about 149°C to 204°C (300 to 400°F) is input to the chimney 8 via the discharge duct 17 and discharged to the atmosphere. The nitrogen oxides being discharged are below 15ppmv and the carbon monoxide is below 50ppmv.

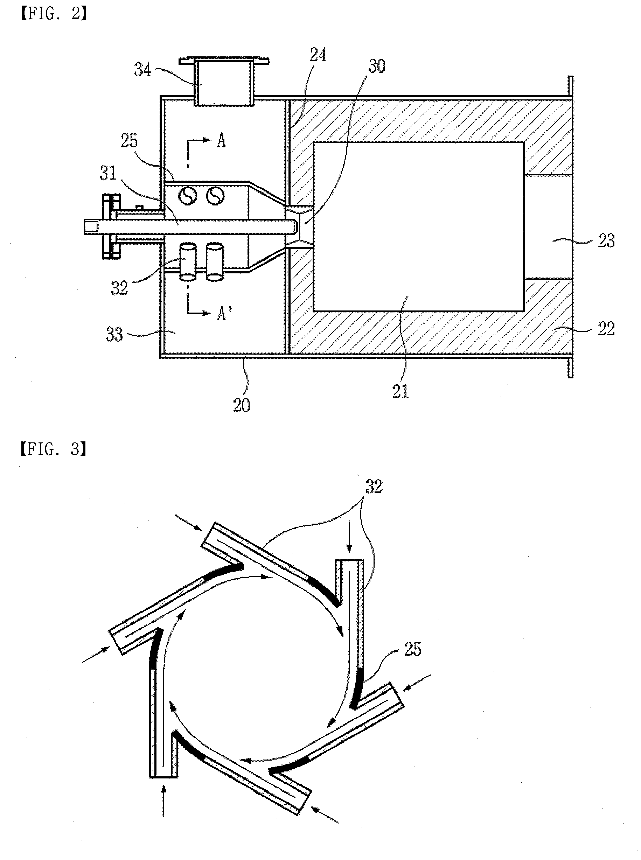

FIG. 2 shows a low oxygen turbulence burner disclosed in Korean Patent Publication No. 10-0667223. FIG. 3 is a cross-sectional view taken along the line A-A' in FIG. 2. Referring to FIG. 2, exhaust gas generated in the internal combustion engine of a boiler is used as a combustion air supply source to be re-combusted. Thus, the exhaust gas is discharged in the completely combusted state and is prevented from contaminating the natural environment. The exhaust gas inflows into an injection space and is primarily mixed with fuel sprayed through a nozzle 31 while generating turbulence by means of an outer case 25, and then sprayed through the nozzle 31 while passing through an orifice 30. Referring to FIG. 3, a turbulence pipe 32 is installed to be inclined at 20 to 60 degrees in parallel with the tangential direction of the outer case 25. When the exhaust gas inflows into inside of the outer case 25, it is converted into an eddy current by means of contacting with the inner side of the outer case 25 and discharged towards an outlet port of funnel shape.

According to a technique disclosed in Korean Patent Publication No. 10-0667223, fuel is supplied to a combustion chamber 21 while being mixed again and combusted therein. Flame generated in the combustion chamber 21 is re-circulated inside the combustion chamber 21 and incompletely combusted fuel is burned by a choke 23, thereby saving energy and improving heat efficiency of the boiler.

In addition, as the prior art related to the present invention, Korean Patent Publication No. 10-0253991 discloses a method of reducing nitrogen oxides in a boiler, which is a low pollution type burner. According to this technique, the fuel nozzle of a low nitrogen oxide burner, which is disposed in the upper end row of the burner unit, is replaced to increase the amount of fuel being sprayed, or the size of the nitrogen oxide burner is reduced to decrease the amount of combustion air being sprayed.

However, in the conventional techniques, the exhaust gas from an internal combustion engine is mixed with oxygen and supplied to a burner. Thus, the concentration of oxygen is low so that the combustion is unstable and thus flame cannot be properly formed. Accordingly, in order to meet a stable combustion condition, the concentration of oxygen is required to increase and a larger amount of fuel is to be consumed as much as the amount of air being additionally supplied.

### SUMMARY OF THE INVENTION

Accordingly, the present invention has been made in view of the above-mentioned problems occurring in the prior art, and it is a primary object of the present invention to provide a burner for generating a reductive atmosphere of exhaust gas in an engine cogeneration plant having a denitrification process, in which in order to produce a catalyst activation condition to remove nitrogen oxides from the engine exhaust gas in the boiler of the engine cogeneration plant, a mixture of the engine exhaust gas and fuel is injected into an engine exhaust gas injection port and a stable combustion can be maintained by means of an auxiliary burner.

To accomplish the above object of the present invention, according to the present invention, there is provided a burner for generating a reductive atmosphere of exhaust gas in a boiler system of an engine cogeneration plant having a denitrification process. The burner comprises: a post-combustion burner for combusting an internal combustion engine exhaust gas, the internal combustion exhaust gas being supplied from an internal combustion engine exhaust gas injection port; and an auxiliary burner installed in an outer side of the post-combustion burner, wherein the auxiliary burner is combined with a fuel injection port through which fuel is supplied, and an air channel through which air inflows; and combustion heat generated by combusting the supplied fuel and air is provided to a combustion chamber of the post-combustion burner through a flame channel.

A combustible mixture gas is injected to the post-combustion burner through the internal combustion engine exhaust gas injection port. The combustible mixture gas contains fuel more than to the extent to remove oxygen contained in the internal combustion engine exhaust gas. In addition, new air through a blower and fuel are injected at the same time to the auxiliary burner and combusted therein.

The new air is injected to an air injection port and recovers heat transferred from a combustion flame inside the combustion chamber while passing through the air channel, thereby enabling to prevent heat loss and safety accidents.

The burner further comprises a damper capable of adjusting the amount of a combustible mixture gas to be supplied to the front and rear sides of the flame of the auxiliary burner after being injected to the internal combustion engine exhaust gas injection port, thereby enabling to adjust combustion conditions. The combustible mixture gas is a mixture of internal combustion engine exhaust gas and fuel.

The present invention generates a stable reductive atmosphere required for denitrification catalyst to remove nitrogen oxides, which is produced in engine exhaust gas of an engine cogeneration plant using a lean burn engine. According to the present invention, fuel is injected into the engine exhaust gas in advance, and thus a combustible mixture gas of the engine exhaust gas and fuel is injected through an injection port. A new air and fuel are supplied to an auxiliary burner respectively and combusted therein, thereby enabling to achieve, in a stable way, a reductive atmosphere having oxygen of no more than 1% and carbon monoxide of about 1000ppmv.

At this time, the total amount of fuel being supplied is made to be an amount necessarily required to consume 6 to 12% of oxygen contained in the exhaust gas of the internal combustion engine and for the post-combustion burner to be operated in a stable way.

In particular, fuel is divided and supplied to the internal combustion engine exhaust gas injection port and the auxiliary burner and the auxiliary burner carries out combustion using the new air. Thus, since the internal combustion engine exhaust gas and fuel are supplied in a mixed state, a stable flame can be formed, notwithstanding that the combustible mixture gas contains a low oxygen content of 6 to 12%. In addition, the amounts of the auxiliary fuel and the new air can be varied to maintain an optimum combustion condition, thereby enabling to maximize efficiency of the cogeneration plant.

### BRIEF DESCRIPTION OF THE DRAWINGS

The above and other objects, features and advantages of the present invention will be apparent from the following detailed description of the preferred embodiments of the invention in conjunction with the accompanying drawings, in which:
FIG. 1 is a block diagram showing a conventional engine cogeneration plant capable of reducing nitrogen oxides;
FIG. 2 shows a conventional turbulence burner;
FIG. 3 is a cross-sectional view taken along the line A-A' in FIG. 2;
FIG. 4 is an exploded perspective view of a post-combustion burner according to an embodiment of the invention;
FIG. 5 is a front sectional view of the post-combustion burner of FIG. 4;
FIG. 6 is a side sectional view of the post-combustion burner of FIG. 4; and
FIG. 7 is a cross-sectional view taken along the line B-B' in FIG. 6.

### DETAILED DESCRIPTION OF THE PREFERRED EMBODIMENT

Hereafter, exemplary embodiment of the present invention will be described in detail with reference to the appended drawings.

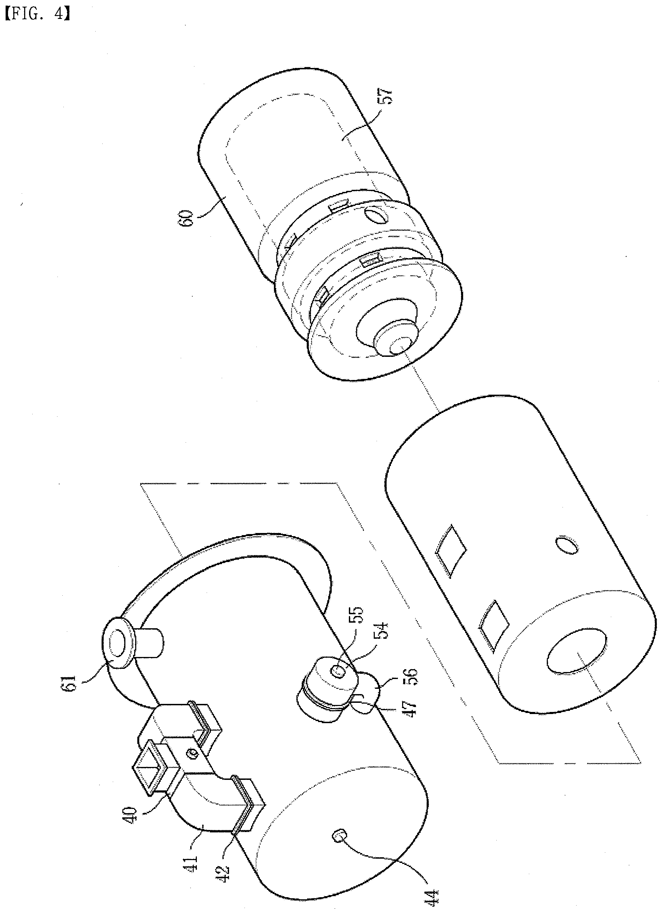

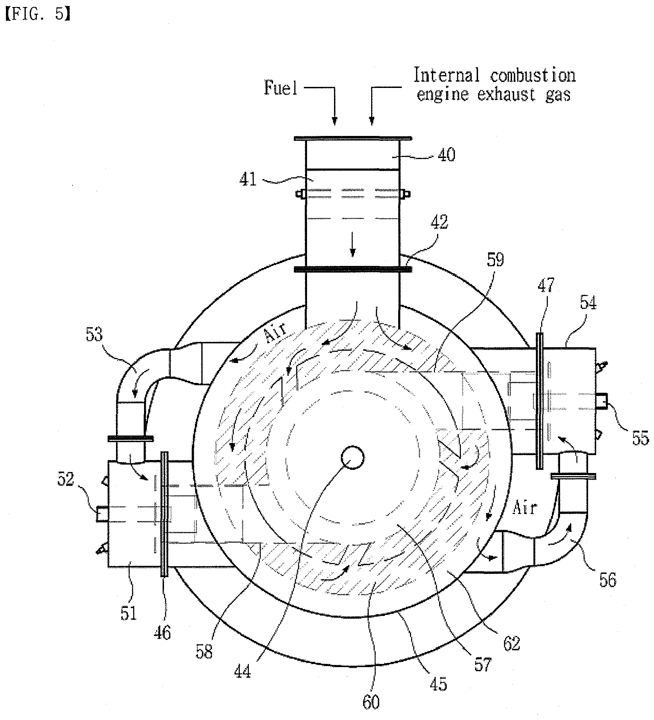

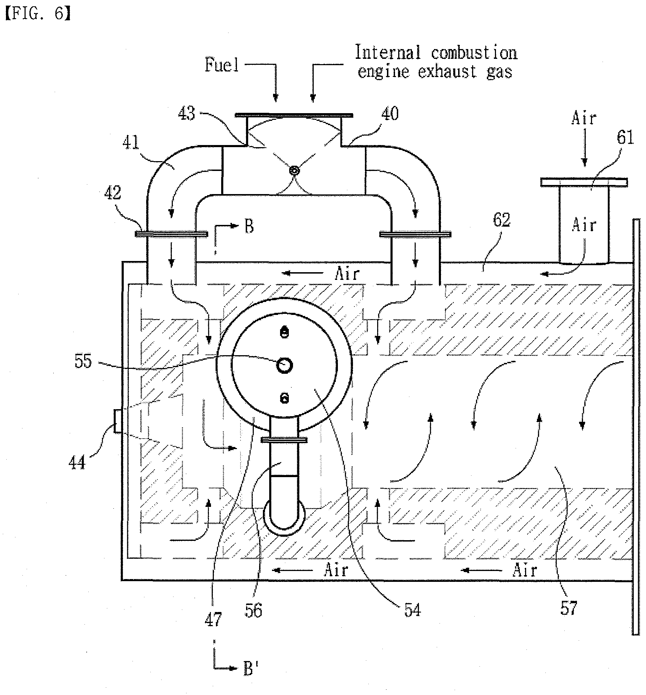

FIG. 4 is an exploded perspective view of a post-combustion burner according to an embodiment of the invention. FIG. 5 is a front sectional view of the post-combustion burner of FIG. 4. FIG. 6 is a side sectional view of the post-combustion burner of FIG. 4. This embodiment illustrates an improvement in the structure of the boiler of FIG. 1.

As illustrated in FIGS. 4 and 5, in the structure of a post-combustion burner, which is equipped in a boiler, a mixture of engine exhaust gas and fuel is injected through an injection port 40 of internal combustion engine exhaust gas. The injection port 40 is combined to an outer case 45 by means of a first flange 42. Installed at both sides of the post-combustion burner are two auxiliary burners 51 and 54. The first auxiliary burner 51 is combined with a fuel injection port 52 and an air channel 53 and combined with the outer case 45 of the post-burner by means of a second flange 46. The first auxiliary burner 51 is connected into a combustion chamber 57 of the post-combustion burner through a flame channel 58.

The second auxiliary burner 54 is also combined with the fuel injection port 55 and the air channel 56 and combined with the outer case of the post-combustion burner by means of a third flange 47. The second auxiliary burner 54 is connected into the combustion chamber 57 of the post-combustion burner through the flame channel 59. Reference numeral 44 denotes a viewing window, 60 denotes a ceramic refractory, 61 denotes an injection port for new air flowing from a blower, and 62 denotes a channel for the new air being supplied to the auxiliary burners.

It is preferable that the above auxiliary burners 51 and 54 are installed at the lower half portion of the post-combustion burner at a certain angle. In addition, when required, it is preferable that one or more than two auxiliary burners are installed in the post-combustion burner.

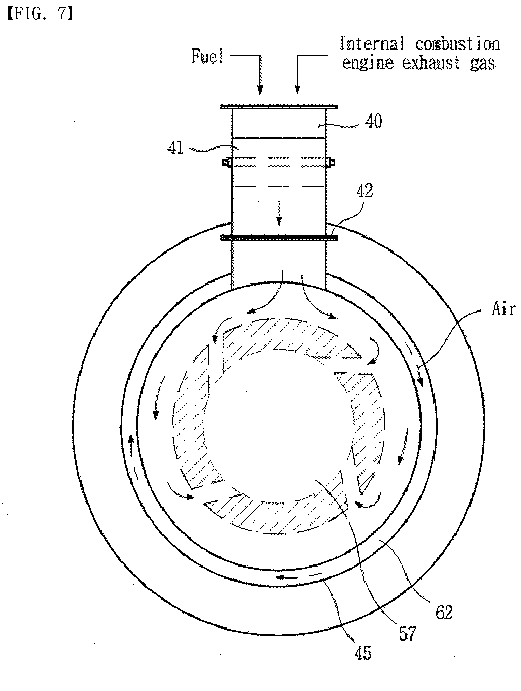

FIG. 6 is a side sectional view of the post-combustion burner, and FIG. 7 is a cross-sectional view taken along the line B-B'. As illustrated in FIGS. 6 and 7, in the present invention, when the combustible mixture gas of the internal combustion engine exhaust gas and fuel is injected through the exhaust gas injection port 40, the combustible mixture gas is divided to the left and right sides by means of a damper 43 and then supplied to the front and rear side of the combustion chamber 57, where flame produced in the auxiliary burners 51 and 54 is provided. Here, the division ratio by the damper 43 can be adjusted in order to optimize combustion conditions.

Further, if a new air being supplied from the blower is supplied to the air injection port 61, the new air passes through an air channel 62 at the outermost of the post-combustion burner and again supplied to the two auxiliary burners 51 and 54 by means of a new air supply channels 53 and 56. The combustion heat from the auxiliary burner is supplied to the combustion chamber 57 of the post-combustion burner through the flame channel 59.

Accordingly, the combustion chamber of the post-combustion burner is supplied with a high-temperature combustion heat and heats the combustible mixture gas of the internal combustion engine exhaust gas and fuel to achieve, in a stable manner, a reductive atmosphere having oxygen no more than 1% and carbon monoxide of about 1000ppmv.

Furthermore, the operator can view through the viewing window the combustion condition of flame inside the combustion chamber 57.

Conventionally, the internal combustion engine exhaust gas and newly supplied air are mixed in advance and then injected into the internal combustion engine exhaust gas injection port 40. Therefore, since the concentration of oxygen becomes lower, the combustion can not occur in a stable manner.

However, in this embodiment of the invention, the combustible mixture gas of the internal combustion engine exhaust gas and fuel is injected into the internal combustion engine exhaust gas injection port 40. Here, the amount of fuel being supplied is to the extent that the 6 to 12% oxygen contained in the internal combustion engine exhaust gas can be consumed.

In the embodiments of the invention, the auxiliary burner is installed in order to combust in a stable manner the combustible gas, which is injected through the internal combustion engine exhaust gas injection port. The flame generated in the auxiliary burner is supplied to inside of the combustion chamber 57 of the post-combustion burner and produces turbulence. Thus, the staying time of the flame becomes longer such that the combustible gas inside the combustion chamber can be completely combusted. The basic principles are generally known and the turbulence burner in FIG. 2 or the like is utilized. In addition, the present invention can be applied to a water tube packaged boiler, as well as a smoke tube packaged boiler.

In the embodiments of the present invention, new air, which is supplied to the auxiliary burners 51 and 54 from the blower, is injected to the new air injection port 61. While the new air passes through the outermost air channel 62 of the post-combustion burner, the heat being transferred from a channel of 450°C or combustion flame of above 1200°C is shield by the new air and absorbed to the air, and then used again in the combustion chamber, thereby enabling to reduce heat loss and simultaneously secure safety for fire or skin burn, which may be caused by an increase on the surface temperature of the post-combustion burner.

While the present invention has been described with reference to the particular illustrative embodiments, it is not to be restricted by the embodiments but only by the appended claims. It is to be appreciated that those skilled in the art can change or modify the embodiments without departing from the scope of the present invention as defined in the appended claims.

Disclosed is a burner for generating a reductive atmosphere of exhaust gas in a boiler system of an engine cogeneration plant having a denitrification process. The burner comprises a post-combustion burner for combusting an internal combustion engine exhaust gas, and an auxiliary burner installed in an outer side of the post-combustion burner. The internal combustion exhaust gas is supplied from an internal combustion engine exhaust gas injection port. The auxiliary burner is combined with a fuel injection port through which fuel is supplied, and an air channel through which air inflows. Combustion heat generated by combusting the supplied fuel and air is provided to a combustion chamber of the post-combustion burner through a flame channel.

## Claims

1. A burner for generating a reductive atmosphere of exhaust gas in a boiler system of an engine cogeneration plant having a denitrification process, the burner comprising:
a post-combustion burner for combusting an internal combustion engine exhaust gas, the internal combustion exhaust gas being supplied from an internal combustion engine exhaust gas injection port (40); and
an auxiliary burner (51, 54) installed in an outer side of the post-combustion burner, wherein the auxiliary burner is combined with a fuel injection port (52, 55) through which fuel is supplied, and an air channel (53, 56) through which air inflows; and combustion heat generated by combusting the supplied fuel and air is provided to a combustion chamber (57) of the post-combustion burner through a flame channel (58, 59);
**characterised in that** a combustible mixture gas is injected to the post-combustion burner, the combustible mixture gas containing fuel to the extent to remove oxygen contained in the internal combustion engine exhaust gas.

2. The burner according to claim 1, wherein the air being supplied to the auxiliary burner (51, 54) is injected to an air injection port (61) and recovers heat transferred from a combustion flame inside the combustion chamber (57) while passing through the air channel (53, 56).

3. The burner according to claim 1, further comprising a damper (43) capable of adjusting the amount of a combustible mixture gas to be supplied to the combustion chamber (57) of the post-combustion burner after being injected to the internal combustion engine exhaust gas injection port (40), the combustible mixture gas being a mixture of internal combustion engine exhaust gas and fuel.

4. The burner according to any one of claims 1 to 3, wherein a combustion channel of the auxiliary burner (51, 54) is installed in a tangential direction of the combustion chamber (57) to cause turbulent flame so that the flame remains inside the combustion chamber (57) for a longer period of time.

5. The burner according to claim 1, wherein the auxiliary burner (51, 54) includes two or more auxiliary burners (51, 54).

## Patentansprüche

1. Brenner zur Erzeugung einer reduzierenden Abgasatmosphäre in einem Dampferzeugersystem einer Motorkogenerationsanlage mit einem Denitrifikationsverfahren, wobei der Brenner Folgendes umfasst:
einen Nachverbrennungsbrenner zum Verbrennen des Abgases eines Verbrennungsmotors, wobei das Abgas des Verbrennungsmotors von einem Abgaseinleitungskanal (40) des Verbrennungsmotors zugeführt wird; und
einen Hilfsbrenner (51, 54), der in einer äußeren Seite des Nachverbrennungsbrenners installiert ist,
wobei der Hilfsbrenner mit einem Kraftstoffeinleitungskanal (52, 55), durch den Kraftstoff zugeführt wird, und einem Luftkanal (53, 56), durch den Luft einströmt, kombiniert ist; und durch die Verbrennung des zugeführten Kraftstoffs und der zugeführten Luft erzeugte Verbrennungswärme einer Brennkammer (57) des Nachverbrennungsbrenners durch einen Flammenkanal (58, 59) zugeführt wird;
**dadurch gekennzeichnet, dass** ein brennbares Gasgemisch in den Nachverbrennungsbrenner eingeleitet wird, wobei das brennbare Gasgemisch genügend Kraftstoff zur Entfernung von in dem Abgas des Verbrennungsmotors enthaltenem Sauerstoff enthält.

2. Brenner nach Anspruch 1, wobei die dem Hilfsbrenner (51, 54) zugeführte Luft durch einen Lufteinleitungskanal (61) eingeleitet wird und von einer Verbrennungsflamme in der Brennkammer (57) übertragene Wärme beim Strömen durch den Luftkanal (53, 56) rückgewinnt.

3. Brenner nach Anspruch 1, der ferner einen Schieber (43) umfasst, der die Menge an brennbarem Gasgemisch einstellen kann, die der Brennkammer (57) des Nachverbrennungsbrenners nach dem Einleiten in den Abgaseinleitungskanal (40) des Verbrennungsmotors zuzuführen ist, wobei das brennbare Gasgemisch ein Gemisch aus Abgas des Verbrennungsmotors und Kraftstoff ist.

4. Brenner nach einem der Ansprüche 1-3, wobei ein Brennkanal des Hilfsbrenners (51, 54) in einer tangentialen Richtung der Brennkammer (57) installiert ist, um eine turbulente Flamme zu verursachen, so dass die Flamme für einen längeren Zeitraum in der Brennkammer (57) bleibt.

5. Brenner nach Anspruch 1, wobei der Hilfsbrenner (51, 54) zwei oder mehr Hilfsbrenner (51, 54) umfasst.

## Revendications

1. Brûleur destiné à générer une atmosphère réductrice de gaz d'échappement dans un système de chaudière d'une centrale de cogénération à moteur dotée d'un procédé de dénitrification, le brûleur comprenant :
un brûleur de post-combustion pour brûler un gaz d'échappement de moteur à combustion interne, le gaz d'échappement de combustion interne étant fourni depuis un orifice d'injection de gaz d'échappement de moteur à combustion interne (40) ; et
un brûleur auxiliaire (51, 54) installé sur un côté extérieur du brûleur post-combustion, le brûleur auxiliaire étant combiné avec un orifice d'injection de carburant (52, 55) par lequel du carburant est fourni, et un canal d'air (53, 56) par lequel de l'air entre ; et la chaleur de combustion générée par la combustion du carburant et de l'air fournis est délivrée à une chambre de combustion (57) du brûleur post-combustion par le biais d'un canal de flamme (58, 59) ;
**caractérisé en ce qu'**un gaz mixte combustible est injecté dans le brûleur post-combustion, le gaz mixte combustible contenant une quantité de carburant permettant de retirer l'oxygène contenu dans le gaz d'échappement de moteur à combustion interne.

2. Brûleur selon la revendication 1, dans lequel l'air fourni au brûleur auxiliaire (51, 54) est injecté dans un orifice d'injection d'air (61) et récupère la chaleur transférée depuis une flamme de combustion à l'intérieur de la chambre de combustion (57) pendant qu'il traverse le canal d'air (53, 56).

3. Brûleur selon la revendication 1, comprenant en outre un registre (43) permettant d'ajuster la quantité d'un gaz mixte combustible à fournir à la chambre de combustion (57) du brûleur post-combustion après avoir été injecté dans l'orifice d'injection de gaz d'échappement de moteur à combustion interne (40), le gaz mixte combustible étant un mélange de gaz d'échappement de moteur à combustion interne et de carburant.

4. Brûleur selon l'une quelconque des revendications 1 à 3, dans lequel un canal de combustion du brûleur auxiliaire (51, 54) est installé dans une direction tangentielle de la chambre de combustion (57) pour provoquer une flamme turbulente de telle sorte que la flamme reste à l'intérieur de la chambre de combustion (57) pendant un laps de temps plus long.

5. Brûleur selon la revendication 1, dans lequel le brûleur auxiliaire (51, 54) comporte au moins deux brûleurs auxiliaires (51, 54).
